# FASCICULE DE BREVET EUROPEEN

(11) **EP 4 522 494 B1**
(45) Date de publication et mention de la délivrance du brevet: **11.03.2026**
(21) Numéro de dépôt: 23727491.5
(22) Date de dépôt: 12.05.2023
(51) Int. Cl.: B62D 55/21, B62D 55/26

(54) **MAILLON DE CHENILLE POUR UN CHARIOT DE SUPPORT D'UNE MACHINE DE POSE OU DE RÉNOVATION D'UNE VOIE FERRÉE ET ASSEMBLAGE ARTICULÉ DE TELS MAILLONS**
RAUPENKETTENGLIED FÜR EINEN STÜTZWAGEN EINER MASCHINE ZUM VERLEGEN ODER SANIEREN EINER EISENBAHNSTRECKE UND GELENKIGE ANORDNUNG SOLCHER GLIEDER
CRAWLER TRACK LINK FOR A SUPPORT CARRIAGE OF A MACHINE FOR LAYING OR RENOVATING A RAILWAY LINE AND ARTICULATED ASSEMBLY OF SUCH LINKS

(30) Priorité: 13.05.2022 FR 2204587
(43) Date de publication de la demande: 19.03.2025
(73) Titulaire: Matisa Matériel Industriel S.A., 1023 Crissier (CH)
(72) Inventeur: PILET, Jacques, 1302 Vufflens-la-Ville (CH); KINSEY, Jérôme, 1800 Vevey (CH)
(74) Mandataire: Alatis
(86) Numéro de dépôt international: PCT/EP2023/062830
(87) Numéro de publication internationale: WO 2023/218064

(56) Documents cités:
- EP-A1- 2 364 899
- DE-U1- 202014 104 957

## Description

### DOMAINE TECHNIQUE DE L'INVENTION

L'invention concerne, de façon générale, le domaine technique des machines de pose ou de rénovation d'une voie ferrée.

L'invention se rapporte plus spécifiquement à un maillon de chenille pour un chariot de support d'une machine de pose ou de rénovation d'une voie ferrée, à un assemblage articulé d'au moins deux tels maillons, à un train de roulage à chenille pour un chariot de support d'une machine de pose ou de rénovation d'une voie ferrée, comportant une chenille constituée d'un tel assemblage articulé et à un chariot de support d'une machine de pose ou de rénovation d'une voie ferrée muni d'au moins un tel train de roulage à chenille.

### ÉTAT DE LA TECHNIQUE ANTÉRIEURE

Les constructeurs ou gestionnaires de réseaux de transport par chemin de fer ont régulièrement besoin de construire de nouvelles voies ferrées ou de refaire des voies ferrées existantes, c'est-à-dire de remplacer certains des éléments qui les composent tels que les rails et les traverses supportant les rails, ainsi que les moyens de fixation et autres accessoires. Une grande part de ce besoin de renouvellement est due à l'usure des voies, mais il peut aussi s'agir de remplacer des modèles anciens par des modèles plus récents pour permettre de meilleures performances. De telles opérations de pose ou de rénovation de voies ferrées sont réalisées en utilisant un convoi ferroviaire comprenant de multiples machines spécialisées pour réaliser les différentes opérations bien spécifiques.

Durant ces opérations, le convoi ferroviaire est généralement amené à évoluer sur une portion de voie sans rails, en particulier directement sur des traverses.

Des solutions de chariot à chenilles existent, les chariots étant configurés pour évoluer le long de la portion de voie sans rails pendant ces opérations de pose ou de rénovation de voies ferrées.

Toutefois, pour des raisons de coûts et de durées de vies différentes le renouvellement des rails se fait de plus en plus déphasé du renouvellement des traverses. La problématique de la protection des traverses sur lesquelles circule un chariot à chenilles pendant ces opérations prend donc une place grandissante.

On connaît des solutions répondant à une telle problématique, telles que celle divulguée dans le document DE202021001054 qui propose d'entourer la chenille d'une bande de matériau de protection en caoutchouc. Toutefois, de tels mécanismes sont complexes car ils impliquent de gérer le déplacement distinct de la chenille et de la courroie de protection en caoutchouc et, en pratique, engendre un certain nombre de contraintes lors de son utilisation qui nécessitent des opérations de maintenance régulière, par exemple pour protéger ces éléments de l'environnement extérieur et éviter de dégrader leur fonctionnement.

Le document DE 20 2014 104957 U1 décrit un autre exemple d'un maillon de chenille selon le préambule de la revendication 1.

### EXPOSE DE L'INVENTION

L'invention vise à remédier à tout ou partie des inconvénients de l'état de la technique en proposant notamment une solution permettant de mieux protéger les traverses, notamment au niveau de leurs chanfreins, pendant les opérations de pose ou de renouvellement de rail tout en améliorant les chariots du convoi, tant en ce qui concerne leur simplicité que leur fiabilité.

Pour ce faire est proposé, selon un premier aspect de l'invention, un maillon de chenille pour un chariot de support d'une machine de pose ou de rénovation d'une voie ferrée, comportant une pièce métallique monobloc définissant deux axes d'articulation parallèles et distants l'un de l'autre, la pièce métallique monobloc présentant une portion centrale située entre les deux axes d'articulation et deux portions d'extrémité opposées de part et d'autre de la portion centrale, chacune des portions d'extrémité étant associée à l'un des deux axes d'articulation, et comportant plusieurs doigts parallèles séparés deux à deux par des espaces sans doigt et traversés par des trous alignés suivant l'axe d'articulation associé, la pièce métallique monobloc comportant une face de roulement située d'un côté d'un plan géométrique de référence contenant les deux axes d'articulation et une face opposée à la face de roulement située d'un autre côté du plan géométrique de référence, la face opposée étant recouverte d'une couche de matériau élastomère recouvrant la portion centrale et une partie au moins de chacun des doigts des deux portions d'extrémité.

Grâce à une telle combinaison de caractéristiques, on obtient un maillon protégé sur sa face opposée à sa face de roulement par la couche de matériau élastomère qui permet de supporter des efforts en étant directement au contact des traverses. Une fois assemblé à une pluralité d'autres maillons similaires pour former une chenille, on peut obtenir une pluralité de couches de matériaux élastomères positionnés de manières discontinues, car lesdits couches de matériaux élastomères sont propres à chaque maillon, mais dont le recouvrement sur la face opposée, de la portion centrale et d'une partie au moins de chacun des doigts des deux portions d'extrémité, permet d'assurer un appui des maillons d'une telle chenille sur une portion de voie sans rails durant lequel une couche de matériau élastomère est toujours présente.

Selon un mode de réalisation, la couche de matériau élastomère couvre intégralement une portion principale de la face opposée délimitée par les deux axes d'articulation, et couvre une partie au moins des doigts des deux portions d'extrémité au-delà de la portion principale. De tels maillons assemblés ensemble pour former une chenille permettent de garantir une continuité de la matière élastomère en maximisant la surface de contact.

Selon un mode de réalisation, la portion principale de la face opposée est plane. On favorise ainsi une surface de contact optimisée.

Selon un mode de réalisation, la couche de matériau élastomère présente une épaisseur supérieure ou égale à 6 mm, de préférence supérieure ou égale à 10 mm, et/ou inférieure ou égale à 15 mm, de préférence inférieure ou égale à 12 mm.

Selon un mode de réalisation, l'extrémité de chacun des doigts est arrondie, l'arrondi de chacun desdits doigts étant de préférence délimité par une surface de raccordement arrondie réalisant la jonction entre une surface de la face de roulement et une surface de la face opposée.

Selon un mode de réalisation, la couche de matériau élastomère présente des portions incurvées recouvrant chacune une portion arrondie de l'extrémité de chacun des doigts du côté de la face opposée à la face de roulement.

Selon un mode de réalisation, la couche de matériau élastomère est continue, et présente de préférence une épaisseur constante.

Selon un mode de réalisation, le matériau élastomère constituant la couche comprend du caoutchouc, de préférence est constitué de caoutchouc.

Selon un mode de réalisation, la couche de matériau élastomère présente une dureté supérieure ou égale à 92 shore A, et/ou inférieure ou égale à 97 shore A. Une telle dureté permet une résistance améliorée pour un usage dans le domaine ferroviaire.

Selon un mode de réalisation, un entraxe pris entre les axes d'articulations des portions d'extrémité est supérieur ou égal à 45 mm et/ou inférieur ou égal à 55 mm. Grâce à un tel entraxe, la taille des maillons est suffisamment réduite pour améliorer la surface de contact sur les traverses de la voie ferrée en cours de pose ou de rénovation.

Selon un mode de réalisation, au moins certains des doigts de chacune des deux portions d'extrémité ont des faces latérales de guidage transversal planes perpendiculaires aux axes d'articulation et délimitant deux à deux les espaces sans doigt.

Selon un mode de réalisation, les doigts de l'une des deux portions d'extrémité sont positionnés chacun entre deux plans perpendiculaires aux axes d'articulation et délimitant des espaces sans doigt de l'autre des deux portions d'extrémité.

Selon un mode de réalisation, la face de roulement comporte deux pistes de roulement séparées par une nervure de guidage.

Selon un autre aspect de l'invention, celle-ci a trait à un assemblage articulé d'au moins deux maillons tels que décrits ci-avant, remarquable en ce que les doigts d'une portion d'extrémité d'un premier des deux maillons sont insérés dans les espaces sans doigt d'une portion d'extrémité d'un deuxième des deux maillons de sorte à être entrecroisés, l'assemblage articulé comportant en outre un gond inséré dans les trous de chacun des doigts entrecroisés des premier et deuxième maillons.

Un exemple d'un assemblage articulé est celui d'une chenille, qui correspond à une chaîne sans fin de tels maillons articulés deux à deux
Selon un mode de réalisation, les maillons sont identiques.

Selon un mode de réalisation, les bandes de matière élastomère des maillons sont deux à deux en recouvrement partiels dans une direction perpendiculaire à la direction transversale du châssis.

Selon un autre aspect, l'invention concerne également un train de roulage à chenille pour un chariot de support d'une machine de pose ou de rénovation d'une voie ferrée, comportant une chenille constituée d'un assemblage articulé d'une pluralité de maillons tel que décrit ci-avant assemblés deux à deux successivement et comprenant un châssis portant des galets de guidage de la chenille pour rouler sur les faces de roulement des maillons de la chenille.

Selon un mode de réalisation, un entraxe entre deux galets adjacents est supérieur ou égal à 45 mm et/ou inférieur ou égal à 55 mm.

Selon un mode de réalisation, les galets ont des axes parallèles aux axes d'articulation des maillons, un entraxe des galets étant strictement supérieur à la valeur d'un entraxe pris entre les axes d'articulation d'un maillon et strictement inférieur à la valeur de deux fois l'entraxe pris entre les axes d'articulation d'un maillon.

Selon un autre aspect, l'invention concerne également un chariot de support d'une machine de pose ou de rénovation d'une voie ferrée remarquable en ce qu'il comprend au moins un train de roulage à chenille tel que décrit ci-avant, de préférence au moins deux train de roulage latéraux..

### BRÈVE DESCRIPTION DES FIGURES

D'autres caractéristiques et avantages de l'invention ressortiront à la lecture de la description qui suit, en référence aux figures annexées, qui illustrent :
- figure 1 : une vue en perspective isométrique d'un chariot de support d'une machine de pose ou de rénovation d'une voie ferrée selon un mode de réalisation ;
- figure 2 : une vue de dessus en perspective isométrique d'un train de roulage à chenille pour le chariot de support de la figure 1 ;
- figure 3 : une vue de face du train de roulage à chenille de la figure 2 ;
- figure 4 : une vue de dessous en perspective isométrique du train de roulage à chenille de la figure 2 ;
- figure 5 : une vue d'un maillon de chenille du train de roulage à chenille de la figure 2 ;
- figure 6 : une vue en perspective isométrique d'une partie d'une chenille du train de roulage à chenille de la figure 2 ;
- figure 7 : une vue de dessous de la chenille de la figure 6 ;
- figure 8 : une vue de face de la chenille de la figure 6.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

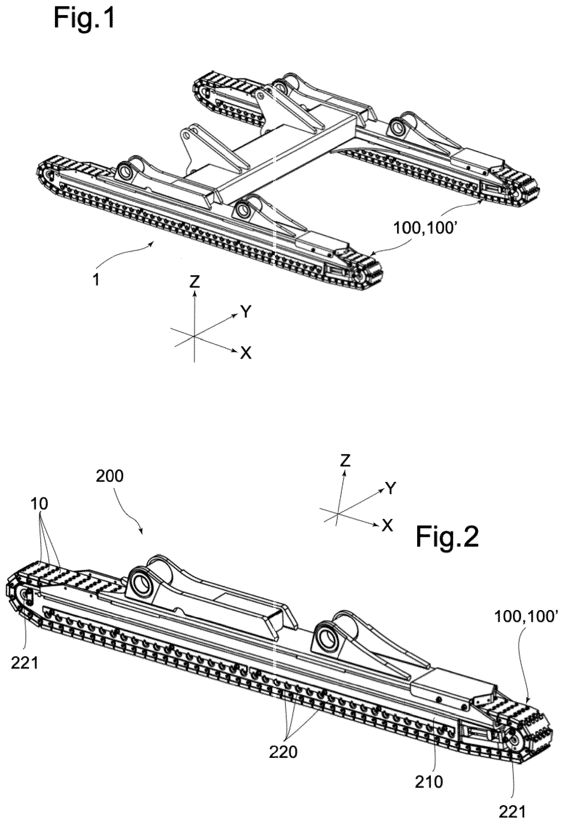

La figure 1 illustre une vue d'un chariot de support **1** d'une machine de pose ou de rénovation d'une voie ferrée (non illustrée), selon un mode de réalisation. Le chariot de support **1** comprend deux trains de roulage **200** disposés latéralement par rapport au chariot de support **1** et parallèlement l'un par rapport à l'autre de façon symétrique par rapport à un plan vertical parallèle à une direction longitudinale **X** du chariot de support **1.**

Chaque train de roulage **200** latéral comprend un châssis **210** portant des galets **220** de guidage d'une chenille **100** afin de guider ladite chenille **100** durant son mouvement de rotation autour des galets **220** de guidage.

Les châssis **210** des deux trains de roulage **200** sont reliés ensemble de sorte à former, un châssis principal du chariot de support **1.** Ce châssis principal, ainsi que les châssis **210** de chacun des deux trains de roulage **200** présentent des interfaces de fixation pour y fixer notamment un ensemble de moyens de liaison avec la machine de pose ou de rénovation de la voie ferrée. Par exemple, ces interfaces de fixation sont configurées pour recevoir au moins un parallélogramme déformable et des moyens pour le commander comprenant par exemple un ensemble de vérins, de sorte à pouvoir déplacer au moins suivant une composante verticale le chariot de support **1.** Ainsi, il est possible de monter le chariot de support **1** dans une position surélevée par rapport à un plan de roulage **P0,** et de descendre le chariot de support **1** dans une position où les chenilles **100** reposent et sont en appui contre une surface de roulage contenue dans le plan de roulage **P0.**

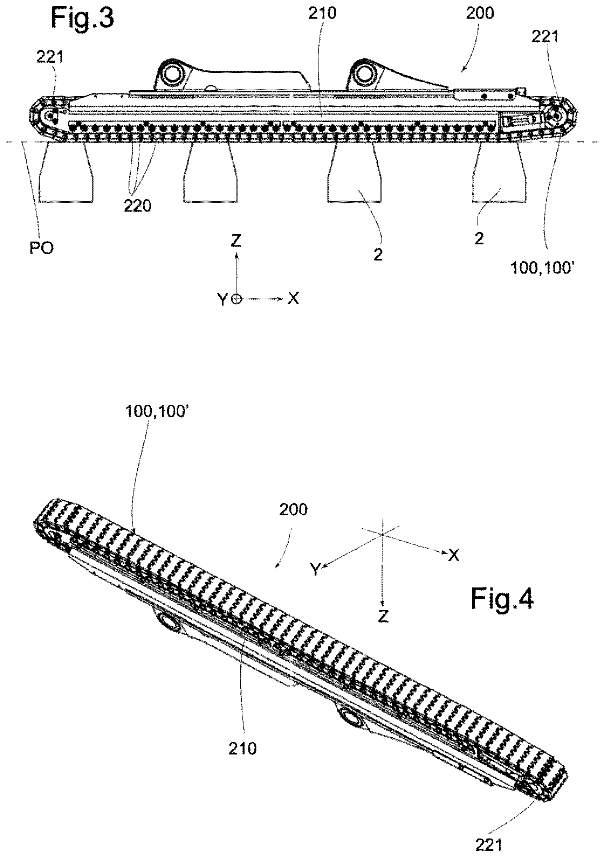

Un train de roulage **200** selon le mode de réalisation de la figure 1 est illustré plus en détail sur les figures 2, 3 et 4.

La chenille **100** est constituée d'un assemblage articulé **100'** d'une pluralité de maillons **10.** De cette manière, chaque chenille **100** d'un train de roulage **200** associé définit une chaîne sans fin, ou boucle, de maillons **10** articulés deux à deux disposés autour des galets **220** de guidage situés du même côté du chariot de support **1,** associé à l'un des trains latéraux de roulage **200** donné, de façon à s'interposer entre ceux-ci et le plan de roulage **P0.**

Chaque maillon **10** de chenille **100** comporte une pièce métallique monobloc **11** définissant deux axes d'articulation **A1, A2** parallèles et distants l'un de l'autre. Chacun des deux axes d'articulation **A1, A2** est parallèle à une direction transversale Y du châssis **210** associé. La pièce métallique est monobloc **11** et présente une portion centrale **12** située entre les deux axes d'articulation **A1, A2** et deux portions d'extrémité opposées **13, 14** de part et d'autre de la portion centrale **12.** Chacune des portions d'extrémité **13, 14** est associée à l'un des deux axes d'articulation **A1, A2.**

Chacune des portions d'extrémité **13, 14** comporte plusieurs doigts **15** parallèles séparés deux à deux par des espaces **16** sans doigt et traversés par des trous **17** alignés suivant l'axe d'articulation **A1, A2** associé.

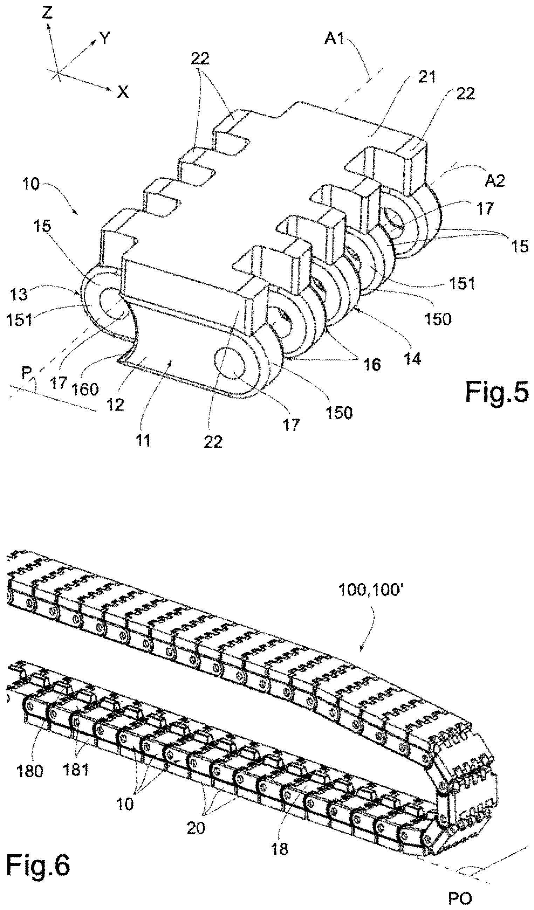

Un exemple de maillon **10** selon ce mode de réalisation est illustré plus en détail sur la figure 5. L'assemblage articulé **100'** de ces maillons **10** deux à deux pour former la chenille **100** est quant à lui illustré plus en détails sur les figures 6, 7 et 8.

L'assemblage articulé **100'** de deux des maillons **10** de la chenille **100** est réalisé lorsque les doigts **15** d'une portion d'extrémité d'un premier des deux maillons **10** parmi deux des maillons assemblés sont insérés dans les espaces **16** sans doigt d'une portion d'extrémité d'un deuxième des deux maillons **10** parmi deux des maillons assemblés de sorte à être entrecroisés. L'entrecroisement des doigts **15** de deux portions d'extrémités **13, 14** de deux maillons **10** distincts permets d'obtenir un alignement des trous de chacun des doigts **15** entrecroisés associés, et ainsi former un orifice, ici traversant, délimité par la succession des trous **17** de chacun des doigts **15** concernés alignés suivant un axe parallèle à une direction transversale **Y** du châssis **210** associé. Un gond **117** inséré dans cette succession de trous **17** alignés de chacun des doigts **15** entrecroisés des portions d'extrémités **13, 14** de deux maillons **10** distincts permet d'assurer une liaison entre ces maillons **10.** On notera que chacun des doigts **15** présente une largeur, suivant un axe parallèle à la direction transversale **Y,** qui peut être égale pour une même portion d'extrémité **13, 14,** et de préférence pour un même maillon **10.** Toutefois, la largeur des doigts **15** peut aussi être variable, par exemple de largeur croissante dans le sens transversal **Y** du centre vers des bords latéraux des portions d'extrémité **13, 14** du maillon **10** associé.

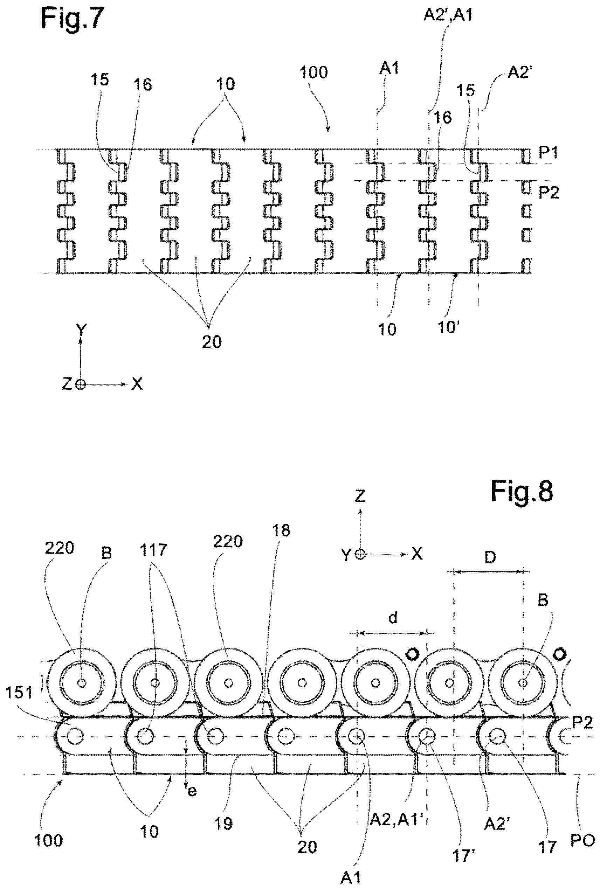

Comme illustré en détails sur les figures 7 et 8 en référence à deux maillons **10, 10'** assemblés ensemble, chacun muni de deux axes d'articulation **A1, A2** et **A1', A2'** respectivement : les trous **17** des portions d'extrémités distinctes des deux maillons **10, 10'** adjacents permettent de mutualiser les deux axes d'articulation **A2, A1'** des portions d'extrémités associées de sorte à ce qu'ils soient coaxiaux en position entrecroisées pour former l'articulation entre ces deux maillons **10, 10'** adjacents.

Afin de maintenir le gond **117** dans l'assemblage articulé **100',** et notamment éviter sa mobilité en translation suivant l'axe géométrique d'articulation **A1, A2,** celui-ci est bloqué dans les deux directions par des moyens de blocage en translation. Ces moyens de blocages peuvent comporter par exemple un épaulement contre lequel vient buter le gond **117** d'un côté de l'articulation et un point de soudure situé de l'autre côté de l'articulation pour le souder avec le maillon **10** associé.

Pour un maillon **10** donné, la pièce métallique monobloc **11** comporte :
- une face de roulement **18** située d'un côté d'un plan géométrique de référence **P** contenant les deux axes d'articulation **A1, A2,** cette face de roulement **18** étant située d'un côté intérieur de la chenille **100.** La face de roulement **18** comporte deux pistes de roulement **181** contre lesquelles viennent rouler les galets **220** de guidage de la chenille **100,** les pistes de roulement **181** étant séparées par une nervure de guidage **180** permettant un guidage simple des maillons **10** et donc de la chenille **100 ;** et
- une face opposée **19** à la face de roulement **18** située d'un autre côté du plan géométrique de référence **P,** cette face opposée **19** étant située d'un côté extérieur de la chenille **100.**

Conformément à l'invention, la face opposée **19** est recouverte d'une couche de matériau élastomère **20** recouvrant la portion centrale **12** et une partie au moins de chacun des doigts **15** des deux portions d'extrémité **13, 14.** Cette couche de de matériau élastomère **20** étant situé du côté de la chenille **100** orienté vers l'extérieur, opposée au châssis **210,** elle assure d'une part une bonne adhérence du chariot sur la surface de roulage, contenue dans le plan de roulage **P0.** Par ailleurs, cette couche de matériau élastomère **20** permet d'éviter toute dégradation de la matière contre laquelle le chariot de support **1** est posé. En particulier, lorsque le chariot de support **1** est posé sur une portion de voie sans rails, c'est-à-dire directement sur des traverses **2** de la voie ferrée, la couche de matériau élastomère **20** vient s'interposer entre le maillon **10** associé et les traverses **2** protégeant ainsi lesdites traverses **2.**

Plusieurs procédés de fabrication d'un maillon **20** peuvent être mis en œuvre pour permettre la mise en place de la couche de matériau élastomère **20** sur la pièce métallique monobloc **11.** Parmi les procédés possibles, on peut citer la vulcanisation d'un matériau élastomère vulcanisable. Dans ce cas, la vulcanisation est effectuée avec apport de chaleur et de pression. Une variante de la vulcanisation est le collage à froid. On notera que la couche de matériau élastomère **20** pourrait être armé. Une telle armature pourrait par exemple être un tissu. Ce tissu peut avantageusement être de couleur, par exemple rouge, pour servir de témoin d'usure facilement visible et détectable des couches de matériau élastomère **20** de chacun des maillons **10.**

Pour garantir une continuité d'appui du chariot de support **1** sur une couche de matériau élastomère **20,** les couches de matériau élastomère **20** des maillons **10** sont deux à deux en recouvrement partiels dans une direction perpendiculaire à la direction transversale du châssis **210,** à savoir dans une direction longitudinale ici. En particulier, cette caractéristique est obtenue par le fait que la face opposée **19** de chaque maillon **10** est recouverte par la couche de matériau élastomère **20** recouvrant la portion centrale **12** et une partie au moins de chacun des doigts **15** des deux portions d'extrémité **13, 14,** ceci pour chacun des maillons **10** de la chenille **100.**

En particulier, dans ce mode de réalisation, la couche de matériau élastomère **20** de chacun des maillons **10** couvre intégralement une portion principale **21** de la face opposée **19** délimitée par les deux axes d'articulation **A1, A2,** et couvre une partie au moins des doigts **15** des deux portions d'extrémité **13, 14** au-delà de la portion principale **21.**

Comme cela est visible en particulier sur la figure 7, on obtient dans une position assemblée des maillons **10,** les doigts **15** d'une portion d'extrémité de chaque maillon **10** de la chenille **100** insérés dans les espaces **16** sans doigt de l'une des portions d'extrémité du maillon **10** adjacent, la couche de matériau élastomère **20** s'étendant au-delà de la portion principale **21,** on obtient au niveau des d'une portion d'extrémité **13, 14** de chaque maillon **10,** un entrecroisement des couches de matériau élastomère **20** adjacentes deux à deux.

Pour garantir une résistance nécessaire et suffisante aux couches de matériau élastomère **20,** celle-ci est configurée de sorte que la couche de matériau élastomère **20** présente une épaisseur **e** supérieure ou égale à **6** mm, de préférence supérieure ou égale à **10** mm, et/ou inférieure ou égale à **15** mm, de préférence inférieure ou égale à **12** mm. Pour les mêmes raisons de résistance, le matériau élastomère constitutif de la couche **20** est choisi de sorte à présenter une dureté supérieure ou égale à **92** shore A, et/ou inférieure ou égale à **97** shore A.

Le matériau élastomère utilisé peut être naturel ou synthétique. Le caoutchouc est un exemple de matériau élastomère pouvant être utilisé dans le cadre de cette application.

Les doigts **15** des maillons **10** présentent des extrémités arrondies, l'arrondi de chacun desdits doigts **15** étant délimité par une surface de raccordement **150** arrondie réalisant la jonction entre une surface de la face de roulement **18** et une surface de la face opposée **19.** Un centre de courbure de la surface de raccordement **150** arrondie est de préférence contenu dans le plan géométrique de référence **P** contenant les deux axes d'articulation **A1, A2.** La surface de raccordement **150** arrondie de sorte à être convexe. Au niveau des doigts **15,** les surfaces de raccordement **150** arrondies délimitent longitudinalement le maillon **10** associé.

La couche de matériau élastomère **20** présente des portions inclinées, par exemple incurvées ou chanfreinées **22,** recouvrant chacune une portion arrondie de l'extrémité arrondie de chacun des doigts **15** du côté de la face opposée **19** à la face de roulement **18.**

Les doigts **15** de chacune des deux portions d'extrémité **13, 14** ont des faces latérales **151** de guidage transversal planes perpendiculaires aux axes d'articulation **A1, A2** et délimitant deux à deux les espaces **16** sans doigt, transversalement.

Longitudinalement, les espaces **16** sans doigt de chacune des deux portions d'extrémité **13, 14** ont une face **160** formant un fond d'espaces présentant une forme complémentaire de celle du doigt **15** qu'elle reçoit. Notamment, le fond des espaces **16** délimitent localement longitudinalement le maillon **10** associé et ont une face arrondie concave dont la courbure est égale à celle des surfaces de raccordement **150** arrondies des doigts associés. De cette manière, on favorise le guidage en rotation des maillons **10** articulés deux à deux tout en protégeant la liaison de l'environnement extérieur tels que des poussières ou des gravats.

La portion principale **21** de la face opposée **19** de chacun des maillons **10** est plane de sorte à maximiser la surface de contact et la répartition des efforts lorsque les maillons sont en appui sur la portion de voie sans rail.

La couche de matériau élastomère **20** est formée d'un seul tenant et continue, c'est-à-dire sans discontinuité tel qu'un trou, de sorte à améliorer sa tenue sur la pièce métallique monobloc **11.** La couche de matériau élastomère **20** présente également une épaisseur **e** constante, même lorsqu'elle recouvre une partie au moins des doigts **15** des deux portions d'extrémité **13, 14** au-delà de la portion principale **21.** De cette manière, on garantit une homogénéité de la protection de la portion de voie sans rail avec la chenille **100** associée, même dans les zones articulées, au niveau des articulations entre maillons **10.**

Comme cela est illustré en détail sur la figure 8 chaque maillon est configuré de sorte qu'un entraxe **d** mesuré entre les axes d'articulations **A1, A2** des portions d'extrémité **13, 14** est supérieur ou égal à **45** mm et/ou, de préférence et, inférieur ou égal à **55** mm. De cette manière on maximise la surface de contact et on garantit une répartition suffisante des efforts sur différents maillons **10.**

Un entraxe **D** entre deux galets **220** adjacents est supérieur ou égal à **45** mm et/ou inférieur ou égal à **55** mm pour maximiser le nombre de point de transfert de la charge sur chaque traverse **2.**

Par ailleurs, les galets **220** sont montés en rotation autour d'axes **B** parallèles aux axes d'articulation **A1, A2** des maillons **10.** Un entraxe **D** des galets est configuré de sorte à être strictement supérieur à la valeur de l'entraxe **d** pris entre les axes d'articulation **A1, A2** des maillons **10** et strictement inférieur à la valeur de deux fois l'entraxe **d** pris entre les axes d'articulation **A1, A2** des maillons **10.** Il est entendu que tous les galets présentent un entraxe **D** identique. De mêmes, tous les maillons **10** sont ici identiques et présentent un entraxe **d** identique.

Pour maximiser encore ce nombre de points de transfert, chaque train de roulage **200** est configuré de sorte que les axes de rotation **B** d'au moins vingt galets **220** coplanaires parmi les galets **220** sont situés dans un même plan. Dans le mode de réalisation illustré ici, l'entraxe **D** des galets **220** est configuré de manière que toujours au moins trois galets s'appuient sur une traverse **2** et/ou, de préférence et, la longueur du chariot de support **1** est configurée en sorte qu'il repose toujours sur au moins trois traverses **2,** de préférence quatre traverses **2.** Pour cela, une longueur d'un sousensemble des galets **220** coplanaires est de préférence supérieure ou égale à 1800 mm, et de préférence encore supérieure ou égale à 1950 mm.

Pour éviter une usure prématurée des chanfreins des traverses **2,** le châssis **210** de chaque train de roulage **200** comporte au moins une portion d'extrémité, portant des galets **221** d'extrémités de sorte que, le long de cette portion d'extrémité, les maillons **10** évoluent le long d'un plan oblique, c'est-à-dire que leur plan géométrique de référence **P** sont inclinés par rapport au plan de roulage **P0.**

Pour faciliter la fabrication et diminuer le coût unitaire, l'ensemble des maillons **10** de la chenille **100,** et du chariot de support **1** sont identiques. Pour permettre un entrecroisement successif des portions d'extrémité **13, 14** des maillons **10** deux à deux malgré qu'il soit identiques, les doigts **15** de l'une des deux portions d'extrémité **13, 14** sont positionnés chacun entre deux plans **P1, P2** perpendiculaires aux axes d'articulation **A1, A2** et délimitant des espaces **16** sans doigt de l'autre des deux portions d'extrémité **13, 14.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela reste dans la portée des revendications attachées qui définissent l'invention ou que des circonstances techniques rendent de telles combinaisons impossibles ou dénuées de sens.

## Revendications

1. Maillon (10) de chenille (100) pour un chariot de support (1) d'une machine de pose ou de rénovation d'une voie ferrée, comportant une pièce métallique monobloc (11) définissant deux axes d'articulation (A1, A2) parallèles et distants l'un de l'autre, la pièce métallique monobloc (11) présentant une portion centrale (12) située entre les deux axes d'articulation (A1, A2) et deux portions d'extrémité opposées (13, 14) de part et d'autre de la portion centrale (12), chacune des portions d'extrémité (13, 14) étant associée à l'un des deux axes d'articulation (A1, A2), et comportant plusieurs doigts (15) parallèles séparés deux à deux par des espaces (16) sans doigt et traversés par des trous (17) alignés suivant l'axe d'articulation (A1, A2) associé, la pièce métallique monobloc (11) comportant une face de roulement (18) située d'un côté d'un plan géométrique de référence (P) contenant les deux axes d'articulation (A1, A2) et une face opposée (19) à la face de roulement (18) située d'un autre côté du plan géométrique de référence (P), **caractérise en ce que** la face opposée (19) est recouverte d'une couche de matériau élastomère (20) recouvrant la portion centrale (12) et une partie au moins de chacun des doigts (15) des deux portions d'extrémité (13, 14).

2. Maillon (10) de chenille (100) selon la revendication 1, **caractérisé en ce que** la couche de matériau élastomère (20) couvre intégralement une portion principale (21) de la face opposée (19) délimitée par les deux axes d'articulation (A1, A2), et couvre une partie au moins des doigts (15) des deux portions d'extrémité (13, 14) au-delà de la portion principale (21).

3. Maillon (10) de chenille (100) selon la revendication 2, **caractérisé en ce que** la portion principale (21) de la face opposée (19) est plane.

4. Maillon (10) de chenille (100) selon l'une quelconque des revendications précédentes, **caractérisé en ce que** la couche de matériau élastomère (20) présente une épaisseur (e) supérieure ou égale à 6 mm, de préférence supérieure ou égale à 10 mm, et/ou inférieure ou égale à 15 mm, de préférence inférieure ou égale à 12 mm.

5. Maillon (10) de chenille (100) selon l'une quelconque des revendications précédentes, **caractérisé en ce que** l'extrémité de chacun des doigts (15) est arrondie, l'arrondi de chacun desdits doigts (15) étant de préférence délimité par une surface de raccordement (150) arrondie réalisant la jonction entre une surface de la face de roulement (18) et une surface de la face opposée (19).

6. Maillon (10) de chenille (100) selon la revendication 5, **caractérisé en ce que** la couche de matériau élastomère (20) présente des portions inclinées, par exemple incurvées ou chanfreinées (22), recouvrant chacune une portion arrondie de l'extrémité de chacun des doigts (15) du côté de la face opposée (19) à la face de roulement (18).

7. Maillon (10) de chenille (100) selon l'une quelconque des revendications précédentes, **caractérisé en ce que** la couche de matériau élastomère (20) est continue, et présente de préférence une épaisseur (e) constante.

8. Maillon (10) de chenille (100) selon l'une quelconque des revendications précédentes, **caractérisé en ce que** la couche de matériau élastomère (20) présente une dureté supérieure ou égale à 92 shore A, et/ou inférieure ou égale à 97 shore A.

9. Maillon (10) de chenille (100) selon l'une quelconque des revendications précédentes, **caractérisé en ce qu'**un entraxe (d) pris entre les axes d'articulations (A1, A2) des portions d'extrémité (13, 14) est supérieur ou égal à 45 mm et/ou inférieur ou égal à 55 mm.

10. Maillon (10) de chenille (100) selon l'une quelconque des revendications précédentes, **caractérisé en ce qu'**au moins certains des doigts (15) de chacune des deux portions d'extrémité (13, 14) ont des faces latérales (151) de guidage transversal planes perpendiculaires aux axes d'articulation (A1, A2) et délimitant deux à deux les espaces (16) sans doigt.

11. Maillon (10) de chenille (100) selon l'une quelconque des revendications précédentes, **caractérisé en ce que** les doigts (15) de l'une des deux portions d'extrémité (13, 14) sont positionnés chacun entre deux plans (P1, P2) perpendiculaires aux axes d'articulation (A1, A2) et délimitant des espaces (16) sans doigt de l'autre des deux portions d'extrémité (13, 14).

12. Maillon (10) de chenille (100) selon l'une quelconque des revendications précédentes, **caractérisé en ce que** la face de roulement (18) comporte deux pistes de roulement (181) séparées par une nervure de guidage (180).

13. Assemblage articulé (100') d'au moins deux maillons (10) parmi un selon l'une quelconque des revendications précédentes, les doigts (15) d'une portion d'extrémité d'un premier des deux maillons (10) sont insérés dans les espaces (16) sans doigt d'une portion d'extrémité d'un deuxième des deux maillons (10) de sorte à être entrecroisés, l'assemblage articulé (100') comportant en outre un gond (117) inséré dans les trous (17) de chacun des doigts (15) entrecroisés des premier et deuxième maillons.

14. Assemblage articulé (100') selon la revendication 13, **caractérisé en ce que** les maillons (10) sont identiques.

15. Train de roulage (200) à chenille pour un chariot de support d'une machine de pose ou de rénovation d'une voie ferrée, comportant une chenille (100) constituée d'un assemblage articulé (100') d'une pluralité de maillons (10) selon les revendications 13 ou 14 assemblés deux à deux successivement et comprenant un châssis (210) portant des galets (220) de guidage de la chenille (100) pour rouler sur les faces de roulement (18) des maillons (10) de la chenille (100).

16. Train de roulage (200) à chenille selon la revendication 15, **caractérisé en ce qu'**un entraxe (D) entre deux galets (220) adjacents est supérieur ou égal à 45 mm et/ou inférieur ou égal à 55 mm.

17. Train de roulage (200) à chenille selon la revendication 15 ou 16, **caractérisé en ce que** les galets (220) ont des axes (B) parallèles aux axes d'articulation (A1, A2) des maillons (10), un entraxe (D) des galets étant strictement supérieur à la valeur d'un entraxe (e) pris entre les axes d'articulation (A1, A2) d'un maillon (10) et strictement inférieur à la valeur de deux fois l'entraxe (e) pris entre les axes d'articulation (A1, A2) d'un maillon (10).

18. Chariot de support (1) d'une machine de pose ou de rénovation d'une voie ferrée **caractérisé en ce qu'**il comprend au moins deux trains de roulage (200) à chenille selon l'une quelconque des revendications 15 à 17.

## Patentansprüche

1. Glied (10) einer Raupenkette (100) für einen Tragwagen (1) einer Maschine zum Verlegen oder Erneuern eines Eisenbahngleises, umfassend ein Monoblock-Metallstück (11), das zwei parallele und voneinander beabstandete Gelenkachsen (A1, A2) definiert, wobei das Monoblock-Metallstück (11) einen zwischen den beiden Gelenkachsen (A1, A2) befindlichen Mittelabschnitt (12) und zwei einander gegenüberliegende Endabschnitte (13, 14) auf beiden Seiten des Mittelabschnitts (12) aufweist, wobei jeder der Endabschnitte (13, 14) einer der beiden Gelenkachsen (A1, A2) zugeordnet ist, umfassend mehrere parallele Finger (15), die paarweise durch fingerlose Zwischenräume (16) getrennt und von Löchern (17) durchzogen sind, die entlang der zugeordneten Gelenkachse (A1, A2) ausgerichtet sind, wobei das Monoblock-Metallstück (11) eine Lauffläche (18) umfasst, die sich auf einer Seite einer geometrischen Bezugsebene (P) befindet, welche die beiden Gelenkachsen (A1, A2) enthält, und eine der Lauffläche (18) gegenüberliegende Fläche (19), die sich auf einer anderen Seite der geometrischen Bezugsebene (P) befindet, **dadurch gekennzeichnet, dass** die gegenüberliegende Fläche (19) mit einer Schicht aus Elastomermaterial (20) bedeckt ist, die den Mittelabschnitt (12) und mindestens einen Teil jedes der Finger (15) der beiden Endabschnitte (13, 14) bedeckt.

2. Glied (10) einer Raupenkette (100) nach Anspruch 1,
**dadurch gekennzeichnet, dass** die Schicht aus Elastomermaterial (20) einen Hauptabschnitt (21) der gegenüberliegenden Fläche (19), der durch die beiden Gelenkachsen (A1, A2) begrenzt ist, vollständig bedeckt und mindestens einen Teil der Finger (15) der beiden Endabschnitte (13, 14) jenseits des Hauptabschnitts (21) bedeckt.

3. Glied (10) einer Raupenkette (100) nach Anspruch 2,
**dadurch gekennzeichnet, dass** der Hauptabschnitt (21) der gegenüberliegenden Fläche (19) eben ist.

4. Glied (10) einer Raupenkette (100) nach einem der vorstehenden Ansprüche, **dadurch gekennzeichnet, dass** die Schicht aus Elastomermaterial (20) eine Dicke (e) von größer oder gleich 6 mm, vorzugsweise größer oder gleich 10 mm und/oder kleiner oder gleich 15 mm, vorzugsweise kleiner oder gleich 12 mm aufweist.

5. Glied (10) einer Raupenkette (100) nach einem der vorstehenden Ansprüche, **dadurch gekennzeichnet, dass** das Ende jedes der Finger (15) abgerundet ist, wobei die Abrundung jedes der Finger (15) vorzugsweise durch eine abgerundete Verbindungsfläche (150) begrenzt ist, die die Verbindung zwischen einer Oberfläche der Lauffläche (18) und einer Oberfläche der gegenüberliegenden Fläche (19) herstellt.

6. Glied (10) einer Raupenkette (100) nach Anspruch 5,
**dadurch gekennzeichnet, dass** die Schicht aus Elastomermaterial (20) geneigte, beispielsweise gekrümmte oder gefaste (22), Abschnitte aufweist, die jeweils einen abgerundeten Abschnitt des Endes jedes der Finger (15) auf der Seite der der Lauffläche (18) gegenüberliegenden Fläche (19) bedecken.

7. Glied (10) einer Raupenkette (100) nach einem der vorstehenden Ansprüche, **dadurch gekennzeichnet, dass** die Schicht aus Elastomermaterial (20) durchgehend ist und vorzugsweise eine konstante Dicke (e) aufweist.

8. Glied (10) einer Raupenkette (100) nach einem der vorstehenden Ansprüche, **dadurch gekennzeichnet, dass** die Schicht aus Elastomermaterial (20) eine Härte von größer oder gleich 92 Shore A und/oder kleiner oder gleich 97 Shore A aufweist.

9. Glied (10) einer Raupenkette (100) nach einem der vorstehenden Ansprüche, **dadurch gekennzeichnet, dass** ein Achsabstand (d) zwischen den Gelenkachsen (A1, A2) der Endabschnitte (13, 14) größer oder gleich 45 mm und/oder kleiner oder gleich 55 mm ist.

10. Glied (10) einer Raupenkette (100) nach einem der vorstehenden Ansprüche, **dadurch gekennzeichnet, dass** mindestens einige der Finger (15) jedes der beiden Endabschnitte (13, 14) ebene, quer verlaufende Führungsseitenflächen (151) aufweisen, die senkrecht zu den Gelenkachsen (A1, A2) stehen und paarweise die fingerlosen Zwischenräume (16) begrenzen.

11. Glied (10) einer Raupenkette (100) nach einem der vorstehenden Ansprüche, **dadurch gekennzeichnet, dass** die Finger (15) eines der beiden Endabschnitte (13, 14) jeweils zwischen zwei Ebenen (P1, P2) positioniert sind, die senkrecht zu den Gelenkachsen (A1, A2) stehen und fingerlose Zwischenräume (16) des anderen der beiden Endabschnitte (13, 14) begrenzen.

12. Glied (10) einer Raupenkette (100) nach einem der vorstehenden Ansprüche, **dadurch gekennzeichnet, dass** die Lauffläche (18) zwei Laufbahnen (181) aufweist, die durch eine Führungsrippe (180) getrennt sind.

13. Gelenkanordnung (100') von mindestens zwei Gliedern (10) unter einem nach einem der vorstehenden Ansprüche, wobei die Finger (15) eines Endabschnitts eines ersten der zwei Glieder (10) in die fingerlosen Zwischenräume (16) eines Endabschnitts eines zweiten der zwei Glieder (10) eingesetzt sind, sodass sie ineinandergreifen, wobei die Gelenkanordnung (100') ferner einen Steckbolzen (117) umfasst, der in die Löcher (17) jedes der ineinandergreifenden Finger (15) des ersten und zweiten Glieds eingesetzt ist.

14. Gelenkanordnung (100') nach Anspruch 13,
**dadurch gekennzeichnet, dass** die Glieder (10) identisch sind.

15. Raupenfahrwerk (200) für einen Tragwagen einer Maschine zum Verlegen oder Erneuern eines Eisenbahngleises, umfassend eine Raupenkette (100), die aus einer Gelenkanordnung (100') einer Vielzahl von Gliedern (10) nach Anspruch 13 oder 14 besteht, die paarweise aufeinanderfolgend zusammengebaut sind, und umfassend ein Fahrgestell (210), das Führungsrollen (220) der Raupenkette (100) trägt, um auf den Laufflächen (18) der Glieder (10) der Raupenkette (100) zu rollen.

16. Raupenfahrwerk (200) nach Anspruch 15,
**dadurch gekennzeichnet, dass** ein Achsabstand (D) zwischen zwei benachbarten Rollen (220) größer oder gleich 45 mm und/oder kleiner oder gleich 55 mm ist.

17. Raupenfahrwerk (200) nach Anspruch 15 oder 16,
**dadurch gekennzeichnet, dass** die Rollen (220) Achsen (B) haben, die parallel zu den Gelenkachsen (A1, A2) der Glieder (10) sind, wobei ein Achsabstand (D) der Rollen strikt größer ist als der Wert eines Achsabstands (e) zwischen den Gelenkachsen (A1, A2) eines Glieds (10), und strikt kleiner ist als der Wert des zweifachen Achsabstands (e) zwischen den Gelenkachsen (A1, A2) eines Glieds (10).

18. Tragwagen (1) einer Maschine zum Verlegen oder Erneuern eines Eisenbahngleises, **dadurch gekennzeichnet, dass** er mindestens zwei Raupenfahrwerke (200) nach einem der Ansprüche 15 bis 17 umfasst.

## Claims

1. A link (10) for a crawler track (100) for a support carriage (1) of a machine for laying or renovating a railway line, comprising a one-piece metal part (11) defining two axes of articulation (A1, A2) that are parallel to and spaced apart from one another, the one-piece metal part (11) having a central portion (12) located between the two axes of articulation (A1, A2) and two opposing end portions (13, 14) on either side of the central portion (12), each of the end portions (13, 14) being associated with one of the two axes of articulation (A1, A2), and comprising a plurality of parallel fingers (15) which are separated in pairs by finger-free spaces (16) and through which holes (17) pass, which holes are aligned along the associated axis of articulation (A1, A2), the one-piece metal part (11) comprising a rolling surface (18) situated on one side of a geometric reference plane (P) that contains the two axes of articulation (A1, A2) and a surface (19) opposite the rolling surface (18), located on another side of the geometric reference plane (P), **characterized in that** the opposing surface (19) is covered with a layer of elastomeric material (20) that covers the central portion (12) and at least part of each of the fingers (15) of the two end portions (13, 14).

2. The link (10) for a crawler track (100) according to claim 1,
**characterized in that** the layer of elastomeric material (20) completely covers a main portion (21) of the opposite surface (19) delimited by the two axes of articulation (A1, A2), and covers at least part of the fingers (15) of the two end portions (13, 14) beyond the main portion (21).

3. The link (10) for a crawler track (100) according to claim 2,
**characterized in that** the main portion (21) of the opposing surface (19) is flat.

4. The link (10) for a crawler track (100) according to any of the preceding claims, **characterized in that** the layer of elastomeric material (20) has a thickness (e) greater than or equal to 6 mm, preferably greater than or equal to 10 mm and/or less than or equal to 15 mm, preferably less than or equal to 12 mm.

5. The link (10) for a crawler track (100) according to any of the preceding claims, **characterized in that** the end of each of the fingers (15) is rounded, the rounding of each of said fingers (15) preferably being delimited by a rounded connecting face (150) forming the junction between a face of the rolling surface (18) and a face of the opposing surface (19).

6. The link (10) for a crawler track (100) according to claim 5,
**characterized in that** the layer of elastomeric material (20) has inclined, for example curved or chamfered, portions (22), each covering a rounded portion of the end of each of the fingers (15) on the side of the surface (19) opposite the rolling surface (18).

7. The link (10) for a crawler track (100) according to any of the preceding claims, **characterized in that** the layer of elastomeric material (20) is continuous, and preferably has a constant thickness (e).

8. The link (10) for a crawler track (100) according to any of the preceding claims, **characterized in that** the layer of elastomeric material (20) has a hardness greater than or equal to 92 Shore A, and/or less than or equal to 97 Shore A.

9. The link (10) for a crawler track (100) according to any of the preceding claims, **characterized in that** a center-to-center distance (d) between the axes of articulation (A1, A2) of the end portions (13, 14) is greater than or equal to 45 mm and/or less than or equal to 55 mm.

10. The link (10) for a crawler track (100) according to any of the preceding claims, **characterized in that** at least some of the fingers (15) of each of the two end portions (13, 14) have flat transverse guide side faces (151) which are perpendicular to the axes of articulation (A1, A2) and delimit the finger-free spaces (16) in pairs.

11. The link (10) for a crawler track (100) according to any of the preceding claims, **characterized in that** the fingers (15) of one of the two end portions (13, 14) are each positioned between two planes (P1, P2) which are perpendicular to the axes of articulation (A1, A2) and delimit finger-free spaces (16) of the other of the two end portions (13, 14).

12. The link (10) for a crawler track (100) according to any of the preceding claims, **characterized in that** the rolling surface (18) comprises two rolling tracks (181) separated by a guide rib (180).

13. An articulated assembly (100') of at least two links (10) of one according to any of the preceding claims, the fingers (15) of an end portion of a first of the two links (10) are inserted into the finger-free spaces (16) of an end portion of a second of the two links (10) so as to be criss-crossed, the articulated assembly (100') further comprising a hinge pin (117) inserted into the holes (17) of each of the criss-crossed fingers (15) of the first and second links.

14. The articulated assembly (100') according to claim 13, **characterized in that** the links (10) are identical.

15. A crawler-track running gear (200) for a support carriage of a machine for laying or renovating a railway line, comprising a crawler track (100) consisting of an articulated assembly (100') of a plurality of links (10) according to claims 13 or 14 assembled successively in pairs and comprising a frame (210) carrying rollers (220) for guiding the crawler track (100) for rolling on the rolling surfaces (18) of the links (10) of the crawler track (100).

16. The crawler-track running gear (200) according to claim 15,
**characterized in that** a center-to-center distance (D) between two adjacent rollers (220) is greater than or equal to 45 mm and/or less than or equal to 55 mm.

17. The crawler-track running gear (200) according to claim 15 or 16,
**characterized in that** the rollers (220) have axes (B) parallel to the axes of articulation (A1, A2) of the links (10), a center-to-center distance (D) of the rollers being strictly greater than the value of a center-to-center distance (e) between the axes of articulation (A1, A2) of a link (10) and strictly less than the value of twice the center-to-center distance (e) between the axes of articulation (A1, A2) of a link (10).

18. A support carriage (1) of a machine for laying or renovating a railway line,
**characterized in that** it comprises at least two crawler-track running gears (200) according to any of claims 15 to 17.
